# EUROPÄISCHE PATENTSCHRIFT

(11) **EP 2 191 948 B1**
(45) Veröffentlichungstag und Bekanntmachung des Hinweises auf die Patenterteilung: **01.01.2014**
(21) Anmeldenummer: 08170074.2
(22) Anmeldetag: 27.11.2008
(51) Int. Cl.: B27D 5/00, B23C 3/12

(54) **Vorrichtung zur Bearbeitung von Kantenrändern**
Device for working panel edges
Dispositif pour travailler les côtés de panneaux

(43) Veröffentlichungstag der Anmeldung: 02.06.2010
(73) Patentinhaber: Homag Holzbearbeitungssysteme AG, 72296 Schopfloch (DE)
(72) Erfinder: Rathgeber, Peter, 72280 Dornstetten (DE)
(74) Vertreter: HOFFMANN EITLE

(56) Entgegenhaltungen:
- EP-A1- 0 583 753
- DE-A1- 4 113 543
- DE-C- 956 807
- DE-C1- 3 732 810

## Beschreibung

### Technisches Gebiet

Die vorliegende Erfindung betrifft eine Vorrichtung zur Bearbeitung eines Kantenrands einer Kantenfläche eines bevorzugt plattenförmigen Werkstücks gemäß dem Oberbegriff des Anspruchs 1.

Mit Vorrichtungen dieser Art können verschiedene Bearbeitungsvorgänge an den Kantenrändern der Werkstücke ausgeführt werden. Als Beispiele seien hier das Profilfräsen im Bereich des Kantenrands und das Bündigfräsen der Kantenoberseite mit der Oberseite des Werkstücks genannt.

### Stand der Technik

DE 956 807 C offenbart eine Vorrichtung mit zwei Schneidwerkzeugen sowie einem Taster, dessen Lagerung auf dem Werkzeughalter sitzt.

Gemäß EP 0 583 753 A1 sind zwei Tastelemente vorgesehen, die gemeinsam von einer ebenfalls auf dem Werkzeughalter vorgesehenen Lagerung gehalten werden.

DE 41 13 543 A1 offenbart eine Vorrichtung mit einer Tastrolle, die konzentrisch mit einem Schneidwerkzeug angeordnet ist und am freien Ende des Werkzeughalters angebracht ist. Dadurch ist das Tastelement direkt an das rotierende Werkzeug angekoppelt, so dass Tragkonstruktionen für das Tastelement und dessen starre Ankopplung an die Lagerung des rotierenden Werkzeugs entfallen können.

Die aus der DE 37 32 810 C1 bekannte Vorrichtung nächstliegender Stand der Technik beinhaltet eine auf den Kantenrand von fortlaufend bewegten plattenförmigen Werkstücken einwirkende Werkzeuganordnung. Die Werkzeuganordnung ist mit einem Werkzeugsatz ausgestattet, der zwei oder mehrere nebeneinander auf einer Motorwelle eines Motors befestigte Fräswerkzeuge aufweist. Das jeweilige für die Bearbeitung vorgesehene Werkzeug wird durch Verschieben des Werkzeugsatzes in Einsatzstellung gebracht.

Die Lage der Werkzeuganordnung zum Kantenrand wird hier durch zwei Tastelemente gesteuert, von denen das eine auf der Kantenfläche und das andere auf der Oberseite des Werkstücks abrollt.

Der Werkzeugsatz ist mittels eines Schwenksegments und einer horizontalen sowie einer vertikalen Schlittenanordnung verfahrbar. Die vertikale Schlittenanordnung ist wiederum auf einer Grundplatte befestigt, die auch Trägerarme für die beiden Tastelemente aufweist.

### Darstellung der Erfindung

Der vorliegenden Erfindung liegt die Aufgabe zugrunde, eine Vorrichtung zur Bearbeitung der Kantenränder von bevorzugt plattenförmigen Werkstücken der eingangs genannten Art zu schaffen, mit der unterschiedliche Bearbeitungsvorgänge flexibel durchgeführt werden können, während die Tasteinrichtung auf möglichst einfache Art und Weise angeordnet ist.

Diese Aufgabe wird gelöst mittels einer Vorrichtung gemäß dem Patentanspruch 1.

Demzufolge weist die Tasteinrichtung für jedes Werkzeug der Werkzeuganordnung jeweils ein separates Tastelement auf. Die Lage des jeweiligen für die Bearbeitung vorgesehenen Werkzeugs relativ zum Kantenrand wird mittels des diesem Werkzeug zugeordneten Tastelements gesteuert.

Diese Ausgestaltung hat den Vorteil, dass durch einfaches Verschieben des Werkzeughalters unterschiedliche Werkzeuge an den zu bearbeitenden Kantenrand gebracht werden können. Um unterschiedliche Bearbeitungsvorgänge auszuführen, muss demnach nicht unbedingt ein kompletter Werkzeugwechsel erfolgen. Die verschiedenen am Werkzeughalter vorgesehenen Werkzeuge können dabei beispielsweise Fräswerkzeuge mit unterschiedlichen Durchmessern sein, die zur Bearbeitung der Kantenränder mit unterschiedlichen Radien oder Fasen vorgesehen sind.

In der erfindungsgemäßen Vorrichtung ist jedem Werkzeug ein eigenes Tastelement unmittelbar zugeordnet.

Durch die erfindungsgemäße Anordnung der Tastelemente auf dem Werkzeughalter und die feste Zuordnung der Tastelemente zu den Werkzeugen ergeben sich folgende Vorteile.

Zunächst ist die Anordnung der Tastelemente in der erfindungsgemäßen Vorrichtung deutlich vereinfacht. Verglichen mit der eingangs beschriebenen, aus der DE 37 32 810 C1 bekannten Vorrichtung sind keine separaten Trägerarme für die Tastelemente notwendig, sondern die Tastelemente werden direkt auf dem Werkzeughalter der Werkzeuganordnung vorgesehen. Dadurch verringert sich das Gewicht der während der Kantenbearbeitung zu bewegenden Teile und somit auch die notwendige Antriebsleistung.

Dabei sind das Tastelemente den Werkzeugen gleichzeitig unmittelbar räumlich benachbart, so dass stets eine genaue Führung des gerade eingesetzten Werkzeugs an dem zu bearbeitenden Kantenrand entlang erfolgt. Das jeweilige Tastelement befindet sich stets dicht sowohl an dem Kantenrand als auch an dem ihm zugeordneten Werkzeug, wodurch eine hochpräzise Bearbeitung des Kantenrands möglich wird.

Mit der erfindungsgemäßen Vorrichtung ist es außerdem nicht mehr notwendig, die relative Lage zwischen den Tastelementen und den jeweils verwendeten Werkzeugen nach einem Werkzeugwechsel einzustellen. Jedem Werkzeug ist ein Tastelement fest zugeordnet, und die relative Lage zwischen dem Werkzeug und dem zugehörigen Tastelement bleibt prinzipiell unverändert. Der Werkzeugwechsel wird dadurch deutlich vereinfacht und verkürzt.

Bevorzugte optionale Merkmale sind in den abhängigen Patentansprüchen beschrieben.

In einer bevorzugten Ausgestaltung sind die Werkzeuge rotierende Werkzeuge, beispielsweise Fräswerkzeuge. Die Vorrichtung weist in diesem Fall einen Motor mit einer Motorwelle zum Antreiben der rotierenden Werkzeuge auf. Die Motorwelle bildet hier den Werkzeugträger, und die Werkzeuge und die Tastelemente sind nebeneinander auf der Motorwelle angeordnet.

Alternativ dazu können die Werkzeuge aber auch translatorisch bewegte Werkzeuge sein, beispielsweise Ziehstähle oder Ziehklingen. Statt durch eine Motorwelle wird der Werkzeughalter in diesem Fall durch einen Ziehstahl- bzw. Ziehklingenhalter gebildet.

Die Tastelemente können jede an sich bekannte Ausgestaltung haben, insbesondere kann es sich um Tastrollen handeln. Falls nun eine solche Tastrolle und ein rotierendes Werkzeug nebeneinander auf einer Motorwelle angeordnet sind, würde sich die Tastrolle beim Anlaufen der Vorrichtung zunächst mit dem mit hoher Geschwindigkeit rotierenden Werkzeug mitdrehen, auch wenn sie nur relativ locker auf der Motorwelle befestigt ist. Beim Aufsetzen der Tastrolle auf das Werkstück würden dann Bremsspuren erzeugt. Es ist daher von Vorteil, wenn die Vorrichtung eine Bremseinrichtung mit einem Bremsbacken hat, der in leichtem Reibkontakt mit einem Außenumfang der Tastrollen steht und verhindert, dass sich die betreffende Tastrolle mit dem zugehörigen Werkzeug mitdreht. Da der Reibungskoeffizient zwischen dem Außenumfang der Tastrollen und dem Bremsbacken aber geringer als derjenige zwischen dem Außenumfang der Tastrollen und dem Werkstück, überwindet die entsprechende Tastrolle beim Aufsetzen auf dem Werkstück den Reibkontakt mit dem Bremsbacken und beginnt auf dem Werkstück abzurollen.

Der Bremsbacken ist dabei vorzugsweise am Werkzeughalter so beweglich gelagert, dass er bei der Bearbeitung des Kantenrands stets in eine Position gelangt, in der er nicht mit den Werkzeugen oder dem Werkstück interferiert. Dies ist insbesondere dann wichtig, wenn eine Werkstückkante mit der erfindungsgemäßen Vorrichtung einmal vollständig umfahren werden soll, d.h. der Kantenrand in einem Bereich von 360° bearbeitet werden soll. Wäre der Bremsbacken nicht beweglich gelagert, würde er während des Umfahrens der Werkstückkante früher oder später mit dem Werkstück und/oder einem Werkzeug interferieren.

Das betreffende Tastelement bewegt sich während der Bearbeitung der Kantenränder an den Werkstückoberflächen entlang. Falls Tastrollen als Tastelemente vorgesehen sind, so kann die betreffende Tastrolle während der Bearbeitung des Kantenrands demnach auf der Werkstückoberseite und Werkstückunterseite sowie der Vorder- und Hinterkante des Werkstücks abrollen. Zusätzlich kann in an sich bekannter Art und Weise ein Seitentastelement vorhanden sein, das sich während der Bearbeitung der Kantenränder an der Werkstückkantenfläche entlang bewegt. Das Seitentastelement kann ein mechanisches Seitentastelement sein; alternativ dazu können Mittel zum berührungslosen Abtasten der Werkstückkantenfläche während der Bearbeitung der Kantenränder vorgesehen sein.

Wie bereits erläutert, bleibt in der erfindungsgemäßen Vorrichtung und die relative Lage zwischen dem Werkzeug und dem zugehörigen Tastelement prinzipiell unverändert. In einer vorteilhaften Weiterbildung sind die Tastelemente jedoch in einer Richtung, in der sie gegen das Werkstück gepresst werden, nachgiebig, so dass beim Anpressen eines Tastelements gegen das Werkstück die relative Lage zwischen Tastelement und Werkzeug in geringem Maße veränderbar ist. Der Hintergrund dieser Weiterbildung ist, dass es sich als vorteilhaft herausgestellt hat, abhängig von der Beschaffenheit des zu bearbeitenden Werkstücks das Tastelement mit einem mehr oder weniger starken Druck gegen das Werkstück zu pressen. Im Falle eines Werkstücks aus einem recht nachgiebigen Material ist beispielsweise ein stärkerer Anpressdruck von Vorteil. Durch die geringfügig nachgiebige Ausgestaltung der Tastelemente ist es nun möglich, die Lage eines Tastelements bezüglich des diesem zugeordneten Werkzeugs im Bereich von einigen hundertstel Millimetern zu verändern, wenn das Tastelement mit einem entsprechenden Anpressdruck beaufschlagt wird.

Vorzugsweise sind die Werkzeuge und die Tastelemente dabei abwechselnd auf dem Werkzeughalter angeordnet, d.h. neben jedem Werkzeug folgt das diesem zugeordnete Tastelement, anschließend das nächste Werkzeug und das diesem zugeordnete Tastelement. Insbesondere können die Werkzeuge unterschiedliche Abmaße wie z.B. Außendurchmesser aufweisen und zu einem freien Ende des Werkzeughalters hin mit abnehmendem Abmaß gestaffelt auf dem Werkzeughalter angeordnet sein.

### Kurze Beschreibung der Zeichnungen

Zwei bevorzugte Ausführungsformen der vorliegenden Erfindung werden im folgenden mit Bezug auf die anliegenden Zeichnungen beschrieben. Darin sind
- Fig. 1: eine Seitenansicht eines Stufenfräswerkzeugs mit festen Tastrollen als einer ersten bevorzugten Ausführungsform,
- Fig. 2: eine schematische Darstellung eines Arbeitsablaufs bei der Kantenbearbeitung, und
- Fig. 3: eine Seitenansicht, Frontansicht und Draufsicht eines Stufenziehstahls mit festen Tastrollen als einer zweiten bevorzugten Ausführungsform.

### Ausführliche Beschreibung der bevorzugten Ausführungsformen

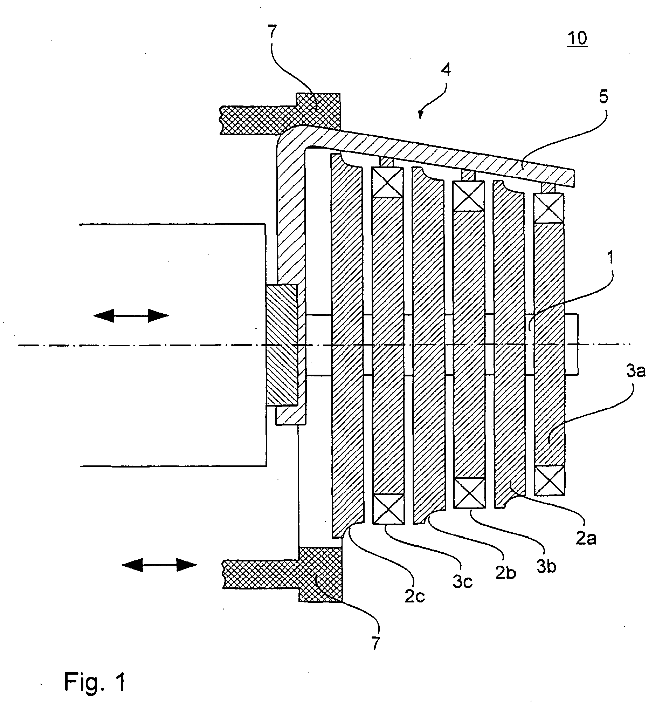

Fig. 1 zeigt eine erste bevorzugten Ausführungsform der vorliegenden Erfindung zur Bearbeitung der Kantenränder von bevorzugt plattenförmigen Werkstücken. Die Vorrichtung 10 beinhaltet eine Motorwelle, auf der nebeneinander drei Fräswerkzeuge 2a, 2b und 2c angeordnet sind. Das jeweilige für die Bearbeitung des Kantenrands vorgesehene Werkzeug ist durch Verschieben des Werkzeughalters an den zu bearbeitenden Kantenrand bringbar. Die Fräswerkzeuge 2a, 2b und 2c weisen unterschiedliche Außendurchmesser auf und sind zu einem freien Ende der Motorwelle hin (nach rechts in der Zeichnung) mit abnehmendem Durchmesser gestaffelt auf der Motorwelle angeordnet.

Für jedes Werkzeug 2a, 2b und 2c weist die Vorrichtung 10 jeweils eine separate Tastrolle 3a, 3b bzw. 3c auf: neben jedem Fräswerkzeug 2a, 2b und 2c ist eine Tastrolle 3a, 3b bzw. 3c auf der Motorwelle angeordnet und dem Werkzeug fest zugeordnet. Die Lage des jeweiligen für die Bearbeitung vorgesehenen Werkzeugs 2a, 2b, 2c relativ zum Kantenrand wird mittels der diesem Werkzeug zugeordneten Tastrolle 3a, 3b, 3c gesteuert. Die Fräswerkzeuge 2a, 2b und 2c und die Tastrollen 3a, 3b und 3c sind dabei abwechselnd auf der Motorwelle 1 vorgesehen.

Die Vorrichtung 10 umfasst außerdem Seitentastelemente 7. Während der Bearbeitung der Kantenränder bewegt sich jeweils eines dieser Seitentastelemente 7 an der Werkstückkantenfläche entlang.

Alternativ zu diesen Seitentastelementen 7 können auch Mittel zum berührungslosen Abtasten der Werkstückkantenfläche während der Bearbeitung der Kantenränder vorgesehen sein. Dadurch wird die Umrüstung der Vorrichtung 10 weiter vereinfacht, da der Umbau einer Seitentastung vollständig entfällt und die Radialtastung durch die den Werkzeugen fest zugeordneten Tastrollen realisiert wird und beim Umrüsten daher ebenfalls keine separaten Arbeitsschritte erfordert.

Die Tastrollen 3a, 3b, 3c sind recht lose auf der Motorwelle 1 aufgesetzt. Dennoch würden sich die die Tastrollen 3a, 3b, 3c beim Anlaufen der Vorrichtung zunächst mit den mit hoher Geschwindigkeit rotierenden Werkzeugen 2a, 2b, 2c mitdrehen. Beim Aufsetzen der Tastrollen 3a, 3b, 3c auf das Werkstück würden dann Bremsspuren erzeugt. Um dies zu verhindern, weist die Vorrichtung 10 eine Bremseinrichtung 4 für die Tastrollen 3a, 3b, 3c auf. Die Bremseinrichtung 4 hat einen Bremsbacken 5, der in leichtem Reibkontakt mit einem Außenumfang der Tastrollen 3a, 3b, 3c steht und verhindert, dass sich die Tastrollen 3a, 3b, 3c mit den Werkzeugen 2a, 2b, 2c mitdreht. Da der Reibungskoeffizient zwischen dem Außenumfang der Tastrollen 3a, 3b, 3c und dem Bremsbacken 5 aber geringer als derjenige zwischen dem Außenumfang der Tastrollen 3a, 3b, 3c und dem Werkstück, überwinden die Tastrollen 3a, 3b, 3c beim Aufsetzen auf dem Werkstück den Reibkontakt mit dem Bremsbacken 5 und beginnen auf dem Werkstück abzurollen.

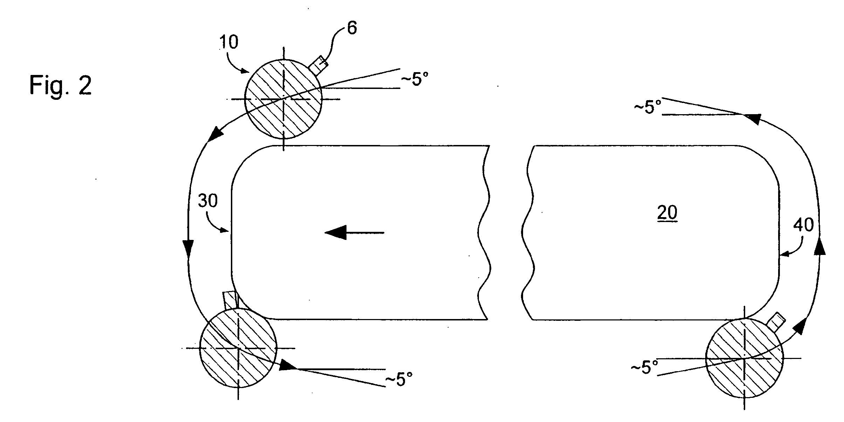

Der Bremsbacken 5 ist dabei an der Motorwelle 1 so beweglich gelagert, dass er bei der Bearbeitung des Kantenrands stets in eine Position gelangt, in der er nicht mit den Werkzeugen 2a, 2b, 2c oder dem Werkstück interferiert. Dies ist insbesondere dann wichtig, wenn eine Werkstückkante mit der erfindungsgemäßen Vorrichtung 10 einmal vollständig umfahren werden soll, d.h. der Kantenrand in einem Bereich von 360° bearbeitet werden soll. Dies wird mit Bezug auf Figur 2 genauer erläutert.

Figur 2 zeigt schematisch eine Kante (Kantenfläche) 20 eines Werkstücks, deren Kantenrand mittels der erfindungsgemäßen Vorrichtung 10 bearbeitet wird. In dem hier dargestellten Arbeitsablauf werden der vordere Kantenrand 30 sowie der hintere Kantenrand 40 der Kante 20 mittels der Vorrichtung 10 bearbeitet. Dazu wird eines der drei Fräswerkzeuge 2a, 2b, 2c der in Figur 1 genauer dargestellten Vorrichtung 10 an den zu bearbeitenden Kantenrand 30 bzw. 40 gebracht. Die zugehörige Tastrolle 3a, 3b, 3c rollt während der Bearbeitung des Kantenrands 30, 40 auf der Werkstückoberfläche ab, die senkrecht zur Zeichenebene der Figur 2 verläuft.

Wäre der Bremsbacken 5 nicht beweglich gelagert, würde er während des Umfahrens der Werkstückkante 20 früher oder später mit dem Werkstück und/oder den Werkzeugen 2a, 2b, 2c interferieren. Der Bremsbacken 5 verfügt daher über einen Verstellhebel 6. Dieser ist in Figur 2 lediglich schematisch dargestellt. Es wird aber deutlich, wie der Verstellhebel 6 während der Bearbeitung des vorderen Kantenrands 30 durch seinen Kontakt mit dem Werkstück aus der links oben in Figur 2 dargestellten Position in die links unten in Figur 2 dargestellte Position gedrückt wird. Dadurch wird der Bremsbacken 5 stets in einer Stellung gehalten, in der er weder mit dem Werkstück noch mit dem Werkzeug 2a, 2b, 2c interferiert.

Die Tastrollen 3a, 3b, 3c können in einer Richtung, in der es gegen das Werkstück gepresst wird, nachgiebig sein, so dass beim Anpressen der jeweiligen Tastrolle 3a, 3b, 3c gegen das Werkstück die relative Lage zwischen Tastrolle und zugehörigem Werkzeug 2a, 2b, 2c in geringem Maße veränderbar ist. Diese Nachgiebigkeit kann durch eine geeignete Auswahl der für die Tastrollen verwendeten Materialien und/oder durch eine geeignete konstruktive Ausgestaltung der Tastrollen erzeugt werden. So ist es beispielsweise denkbar, für jede Tastrolle einen Kunststoffring vorzusehen, der konzentrisch zwischen einem äußeren Stahlring und einem auf der Motorwelle 1 vorgesehenen Kugellager angeordnet ist. Der Kunststoffring hat dabei vorzugsweise eine lineare Nachgiebigkeit bei Druckveränderung.

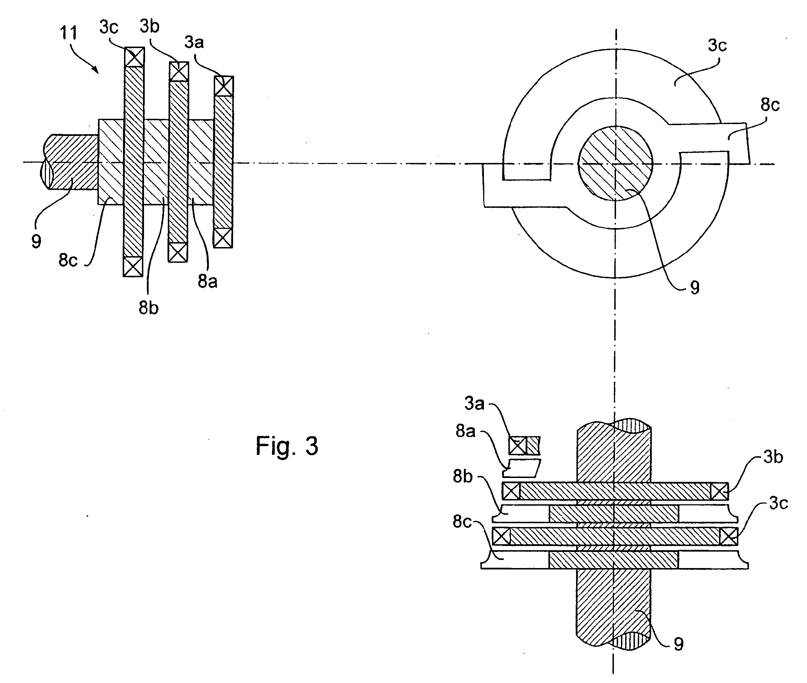

Fig. 3 zeigt eine Seitenansicht, Frontansicht und Draufsicht einer Vorrichtung 11 zur Bearbeitung der Kantenränder von bevorzugt plattenförmigen Werkstücken mit einem Stufenziehstahl mit festen Tastrollen als zweite bevorzugte Ausführungsform der vorliegenden Erfindung.

Die Vorrichtung 11 gemäß Figur 3 unterscheidet sich von der Vorrichtung 10 gemäß Figur 1 insbesondere dadurch, dass anstelle der rotierenden Fräswerkzeuge nun nebeneinander angeordnete, beidseitige Ziehstähle 8a, 8b, 8c vorgesehen sind. Entsprechend wird der Werkzeughalter anstatt durch eine Motorwelle durch einen Ziehstahlhalter 9 gebildet. Die Ziehstähle 8a, 8b, 8c sind abwechselnd mit Tastrollen 3a, 3b, 3c auf dem Ziehstahlhalter 9 vorgesehen. Die beiden Schneiden der Ziehstähle 8a, 8b, 8c sind dabei beispielsweise zur Bearbeitung des vorderen 30 bzw. des hinteren Kantenrands 40 einsetzbar.

Die Erfindung ist nicht auf die eben beschriebenen beiden Ausführungsformen beschränkt. Insbesondere können statt Fräswerkzeugen oder Ziehstählen auch alle anderen für die Bearbeitung von Kantenrändern geeigneten Werkzeuge zum Einsatz kommen, beispielsweise auch Messer zum Säubern von Leimfugen.

## Patentansprüche

1. Vorrichtung (10, 11) zur Bearbeitung **eines** Kantenrands (30, 40) **einer Kantenfläche** (20) **eines** bevorzugt plattenförmigen Werkstücks, mit:
- einer Werkzeuganordnung, die einen Werkzeughalter (1; 9) und zumindest zwei nebeneinander auf dem Werkzeughalter (1; 9) angeordnete Werkzeuge (2a, 2b, 2c; 8a, 8b, 8c) aufweist,
**wobei jedes beliebige dieser Werkzeuge durch entsprechendes Verschieben des Werkzeughalters (1; 9)** an den zu bearbeitenden Kantenrand (30, 40) bringbar ist, **um unterschiedliche Bearbeitungsvorgänge an diesem Kantenrand** (30, 40) durchzuführen; **gekennzeichnet durch**
- eine Tasteinrichtung, die für jedes Werkzeug (2a, 2b, 2c; 8a, 8b, 8c) der Werkzeuganordnung jeweils ein separates Tastelement (3a, 3b, 3c) aufweist, das neben dem jeweiligen Werkzeug (2a, 2b, 2c; 8a, 8b, 8c) auf dem Werkzeughalter (1; 9) angeordnet ist und dem jeweiligen Werkzeug (2a, 2b, 2c; 8a, 8b, 8c) fest zugeordnet ist,
wobei die Lage des jeweiligen für die Bearbeitung vorgesehenen Werkzeugs (2a, 2b, 2c; 8a, 8b, 8c) relativ zum Kantenrand (30, 40) mittels des diesem Werkzeug (2a, 2b, 2c; 8a, 8b, 8c) zugeordneten Tastelements (3a, 3b, 3c) gesteuert wird.

2. Vorrichtung nach Anspruch 1, bei welcher die Werkzeuge (2a, 2b, 2c) rotierende Werkzeuge sind und die Vorrichtung einen Motor mit einer Motorwelle (1) zum Antreiben der rotierenden Werkzeuge aufweist, wobei die Motorwelle (1) den Werkzeugträger bildet und die Werkzeuge (2a, 2b, 2c) und die Tastelemente (3a, 3b, 3c) nebeneinander auf der Motorwelle (1) angeordnet sind.

3. Vorrichtung nach Anspruch 1, bei welcher die Werkzeuge (8a, 8b, 8c) translatorisch bewegte Werkzeuge, beispielsweise Ziehstähle oder Ziehklingen, sind.

4. Vorrichtung nach einem der vorangehenden Ansprüche, bei welcher die Tastelemente (3a, 3b, 3c) Tastrollen sind.

5. Vorrichtung nach Anspruch 4, weiter mit einer Bremseinrichtung (4) mit einem Bremsbacken (5), der in Reibkontakt mit einem Außenumfang der Tastrollen (3a, 3b, 3c) steht, wobei der Reibungskoeffizient zwischen dem Außenumfang der Tastrollen (3a, 3b, 3c) und dem Bremsbacken (5) geringer ist als derjenige zwischen dem Außenumfang der Tastrollen (3a, 3b, 3c) und dem Werkstück.

6. Vorrichtung nach Anspruch 5, bei welcher der Bremsbacken (5) am Werkzeughalter (1) so beweglich gelagert ist, dass er bei der Bearbeitung des Kantenrands (30, 40) stets in eine Position gelangt, in der er nicht mit den Werkzeugen (2a, 2b, 2c) oder dem Werkstück interferiert.

7. Vorrichtung nach einem der vorangehenden Ansprüche, bei welcher sich das dem jeweiligen für die Bearbeitung vorgesehenen Werkzeug (2a, 2b, 2c; 8a, 8b, 8c) zugeordnete Tastelement (3a, 3b, 3c) während der Bearbeitung der Kantenränder (30, 40) an den Werkstückoberflächen entlang bewegt.

8. Vorrichtung nach einem der Ansprüche 1 bis 7, bei welcher die Tasteinrichtung außerdem zumindest ein Seitentastelement (7) umfasst, das sich während der Bearbeitung der Kantenränder (30, 40) an der Werkstückkantenfläche (20) entlang bewegt.

9. Vorrichtung nach einem der Ansprüche 1 bis 7, bei welcher die Tasteinrichtung außerdem Mittel zum berührungslosen Abtasten der Werkstückkantenfläche (20) während der Bearbeitung der Kantenränder (30, 40) umfasst.

10. Vorrichtung nach einem der vorangehenden Ansprüche, bei welcher die Tastelemente (3a, 3b, 3c) in einer Richtung, in der sie gegen das Werkstück gepresst werden, nachgiebig sind, so dass beim Anpressen eines Tastelements (3a, 3b, 3c) gegen das Werkstück die relative Lage zwischen Tastelement (3a, 3b, 3c) und Werkzeug (2a, 2b, 2c; 8a, 8b, 8c) in geringem Maße veränderbar ist.

11. Vorrichtung nach einem der Ansprüche 1 bis 10, bei welcher die Werkzeuge (2a, 2b, 2c; 8a, 8b, 8c) und die Tastelemente (3a, 3b, 3c) abwechselnd auf dem Werkzeughalter (1; 9) angeordnet sind.

12. Vorrichtung nach einem der Ansprüche 1 bis 11, bei welcher die Werkzeuge (2a, 2b, 2c; 8a, 8b, 8c) unterschiedliche Abmaße aufweisen und zu einem freien Ende des Werkzeughalters (1; 9) hin mit abnehmendem Abmaß gestaffelt auf dem Werkzeughalter (1; 9) angeordnet sind.

## Claims

1. Apparatus (10, 11) for machining an edge (30, 40) of an edge face (20) of a preferably board-like workpiece, comprising:
- a tool assembly which has a tool holder (1; 9) and at least two tools (2a, 2b, 2c; 8a, 8b, 8c) disposed adjacent to each other on the tool holder (1; 9), wherein any of these tools can be moved to the edge (30, 40) to be machined by sliding the tool holder (1; 9) accordingly in order to carry out different machining operations on this edge (30, 40);
**characterised by**
- a sensing device which has, for each tool (2a, 2b, 2c; 8a, 8b, 8c) of the tool assembly, a separate sensing element (3a, 3b, 3c) which is arranged adjacent to the respective tool (2a, 2b, 2c; 8a, 8b, 8c) on the tool holder (1; 9) and rigidly allocated to the respective tool (2a, 2b, 2c; 8a, 8b, 8c),
wherein the position of the respective tool (2a, 2b, 2c; 8a, 8b, 8c) relative to the edge (30, 40) which is provided for machining is controlled by means of the sensing element (3a, 3b, 3c) allocated to this tool (2a, 2b, 2c; 8a, 8b, 8c).

2. Apparatus according to claim 1, in which the tools (2a, 2b, 2c) are rotating tools and the apparatus has a motor with a motor shaft (1) for driving the rotating tools, wherein the motor shaft (1) forms the tool carrier, and the tools (2a, 2b, 2c) and the sensing elements (3a, 3b, 3c) are arranged adjacent to each other on the motor shaft (1).

3. Apparatus according to claim 1, in which the tools (8a, 8b, 8c) are translationally moved tools, for example cabinet scrapers or sharpeners.

4. Apparatus according to any of the preceding claims, in which the sensing elements (3a, 3b, 3c) are sensing rollers.

5. Apparatus according to claim 4, further comprising a braking device (4) with a brake shoe (5) which is in frictional contact with an outer periphery of the sensing rollers (3a, 3b, 3c), wherein the coefficient of friction between the outer periphery of the sensing rollers (3a, 3b, 3c) and the brake shoe (5) is lower than that between the outer periphery of the sensing rollers (3a, 3b, 3c) and the workpiece.

6. Apparatus according to claim 5, in which the brake shoe (5) is mounted movably on the tool holder (1) in such a way that, during machining of the edge (30, 40), it always moves into a position in which it does not interfere with the tools (2a, 2b, 2c) or the workpiece.

7. Apparatus according to any of the preceding claims, in which the sensing element (3a, 3b, 3c) allocated to the respective tool (2a, 2b, 2c; 8a, 8b, 8c) which is provided for machining moves along the workpiece surfaces during machining of the edges (30, 40).

8. Apparatus according to any of claims 1 to 7, in which the sensing device further comprises at least one lateral sensing element (7) which moves along the workpiece edge face (20) during machining of the edges (30, 40).

9. Apparatus according to any of claims 1 to 7, in which the sensing device further comprises means for contactless scanning of the workpiece edge face (20) during machining of the edges (30, 40).

10. Apparatus according to any of the preceding claims, in which the sensing elements (3a, 3b, 3c) are flexible in a direction in which they are pressed against the workpiece, so that, when a sensing element (3a, 3b, 3c) is pressed against the workpiece, the relative position between sensing element (3a, 3b, 3c) and tool (2a, 2b, 2c; 8a, 8b, 8c) is variable to a small extent.

11. Apparatus according to any of claims 1 to 10, in which the tools (2a, 2b, 2c; 8a, 8b, 8c) and the sensing elements (3a, 3b, 3c) are arranged alternately on the tool holder (1; 9).

12. Apparatus according to any of claims 1 to 11, in which the tools (2a, 2b, 2c; 8a, 8b, 8c) have different sizes and are in a staggered arrangement on the tool holder (1; 9) with decreasing size towards a free end of the tool holder (1; 9).

## Revendications

1. Dispositif (10, 11) pour l'usinage d'une bordure d'arête (30, 40) d'une surface d'arête (20) d'une pièce de préférence en forme de plaque, comprenant :
- un agencement d'outil, qui comprend un support d'outil (1 ; 9) et au moins deux outils (2a, 2b, 2c ; 8a, 8b, 8c) disposés l'un à côté de l'autre sur le support d'outil (1 ; 9),
dans lequel chacun au choix de ces outils peut être amené par déplacement correspondant du support d'outil (1 ; 9) à la bordure d'arête (30, 40) à usiner, pour exécuter différentes opérations d'usinage sur cette bordure d'arête (30, 40) ;
**caractérisé par**
- un dispositif de palpage, qui comprend pour chaque outil (2a, 2b, 2c ; 8a, 8b, 8c) de l'agencement d'outil respectivement un élément de palpage (3a, 3b ; 3c) séparé qui est disposé à côté de l'outil (2a, 2b, 2c ; 8a, 8b, 8c) respectif sur le support d'outil (1 ; 9) et qui est attribué de manière fixe à l'outil (2a, 2b, 2c ; 8a, 8b, 8c) respectif,
dans lequel l'emplacement de l'outil (2a, 2b, 2c ; 8a, 8b, 8c) respectif prévu pour l'usinage, relatif à la bordure d'arête (30, 40), est commandé au moyen de l'élément de palpage (3a, 3b ; 3c) attribué à cet outil (2a, 2b, 2c ; 8a, 8b, 8c).

2. Dispositif selon la revendication 1, dans lequel les outils (2a, 2b, 2c) sont des outils rotatifs et le dispositif comprend un moteur avec un arbre de moteur (1) pour entraîner les outils rotatifs, l'arbre de moteur (1) formant le support d'outil et les outils (2a, 2b, 2c) et les éléments de palpage (3a, 3b, 3c) étant disposés sur l'arbre de moteur (1).

3. Dispositif selon la revendication 1, dans lequel les outils (8a, 8b, 8c) sont des outils déplacés en translation, par exemple des fusils ou des racloirs.

4. Dispositif selon l'une des revendications précédentes, dans lequel les éléments de palpage (3a, 3b, 3c) sont des rouleaux de palpage.

5. Dispositif selon la revendication 4, comprenant en outre un dispositif de frein (4) avec un sabot de frein (5) qui est en contact de frottement avec un pourtour extérieur des rouleaux de palpage (3a, 3b, 3c), le coefficient de frottement entre le pourtour extérieur des rouleaux de palpage (3a, 3b, 3c) et le sabot de frein (5) étant inférieur à celui entre le pourtour extérieur des rouleaux de palpage (3a, 3b, 3c) et la pièce.

6. Dispositif selon la revendication 5, dans lequel le sabot de frein (5) est ainsi disposé mobile sur le support d'outil (1), que pendant l'usinage de la bordure d'arête (30, 40), il parvient constamment à une position dans laquelle il n'interfère pas avec les outils (2a, 2b, 2c) ou la pièce.

7. Dispositif selon l'une des revendications précédentes, dans lequel l'élément de palpage (3a, 3b, 3c) attribué à l'outil (2a, 2b, 2c ; 8a, 8b, 8c) respectif prévu pour l'usinage se déplace le long des surfaces de pièce pendant l'usinage des bordures d'arête (30, 40).

8. Dispositif selon l'une des revendications 1 à 7, dans lequel le dispositif de palpage comprend en outre au moins un élément de palpage latéral (7) qui se déplace le long de la surface d'arête (20) de pièce pendant l'usinage des bordures d'arête (30, 40).

9. Dispositif selon l'une des revendications 1 à 7, dans lequel le dispositif de palpage comprend en outre des moyens pour palper sans contact la surface d'arête (20) de pièce pendant l'usinage des bordures d'arête (30, 40).

10. Dispositif selon l'une des revendications précédentes, dans lequel les éléments de palpage (3a, 3b, 3c) sont élastiques dans une direction, dans laquelle ils sont pressés contre la pièce, de telle sorte que lorsqu'un élément de palpage (3a, 3b, 3c) est pressé contre la pièce, l'emplacement relatif entre l'élément de palpage (3a, 3b, 3c) et l'outil (2a, 2b, 2c ; 8a, 8b, 8c) est légèrement modifiable.

11. Dispositif selon l'une des revendications 1 à 10, dans lequel les outils (2a, 2b, 2c ; 8a, 8b, 8c) et les éléments de palpage (3a, 3b, 3c) sont disposés en alternance sur le support d'outil (1 ; 9).

12. Dispositif selon l'une des revendications 1 à 11, dans lequel les outils (2a, 2b, 2c ; 8a, 8b, 8c) présentent différentes dimensions et sont disposés sur le support d'outil (1 ; 9) en s'échelonnant avec une dimension décroissante vers une extrémité libre du support d'outil (1 ; 9).
